Europäisches Patentamt

European Patent Office

Office européen des brevets

(11) Numéro de publication: **0 412 008 A1**

# DEMANDE DE BREVET EUROPEEN

(21) Numéro de dépôt: 90402202.7

(22) Date de dépôt: 01.08.90

(51) Int. Cl.⁵: **F02B 23/10**, F02B 23/08

(30) Priorité: 02.08.89 FR 8910441

(43) Date de publication de la demande:
06.02.91 Bulletin 91/06

(84) Etats contractants désignés:
DE GB IT

(71) Demandeur: REGIE NATIONALE DES USINES RENAULT
Boîte postale 103 8-10 avenue Emile Zola
F-92109 Boulogne-Billancourt(FR)

(72) Inventeur: Gastaldi, Patrick
22, rue Geneviève Couturier
F-92500 Rueil Malmaison(FR)
Inventeur: Cliville, François
242, rue de Seine
F-76410 Cleon(FR)

(74) Mandataire: Ernst-Schonberg, Michel et al
8/10, avenue Emile Zola
F-92109 Boulogne Billancourt(FR)

(54) **Moteur multicylindre à injection d'essence, comportant quatre soupapes par cylindre.**

(57) Le moteur multicylindre à injection d'essence de l'invention comprend, pour chaque cylindre, une chambre de combustion "en toit" (6) constituée de deux parois planes inclinées (6a,6b) raccordées au sommet par une paroi cylindrique (6c) selon un diamètre du cylindre; deux soupapes d'admission (4b) et deux soupapes d'échappement (5b) débouchant dans les parois inclinées de la chambre de combustion et disposées diamétralement opposées l'une à l'autre; deux bougies d'allumage et un injecteur d'essence (8) montés sur la paroi cylindrique (6c) et dirigés vers la chambre de combustion; un piston muni d'une protubérance diamétrale supérieure (10) comportant une gorge cylindrique (11c) délimitée par des arêtes (12,13) formées avec deux parois latérales inclinées (11a,11b) respectivement.

FIG. 2

# MOTEUR MULTICYLINDRE À INJECTION D'ESSENCE, COMPORTANT QUATRE SOUPAPES PAR CYLINDRE.

La présente invention concerne un moteur multicylindre à injection d'essence, muni de quatre soupapes par cylindre, destiné notamment à équiper des véhicules automobiles.

Le principe de la combustion interne par injection d'essence mélangée avec de l'air dans le moteur, est connu depuis fort longtemps. De tels moteurs peuvent être classés en deux groupes séparés : les moteurs à injection directe et les moteurs à injection indirecte.

Pour les moteurs à injection directe, l'injection d'essence a lieu à l'intérieur des cylindres en aval de la ou des soupapes d'admission de l'air. Pour les moteurs à injection indirecte, l'injection d'essence a lieu dans la conduite d'admission de l'air du moteur, en amont des soupapes d'admission de l'air, donc en-dehors des cylindres.

A l'heure actuelle, les moteurs à injection indirecte sont pénalisés par des consommations de carburant importantes à faible charge et des émissions de polluants élevées impliquant un retraitement des gaz d'échappement au moyen d'un coûteux catalyseur. Ces phénomènes sont intimement liés au principe même de la combustion d'un mélange homogène air/essence préparé en amont de ou des soupapes d'admission et à la régulation du couple moteur par réduction de la quantité de mélange admise au moyen d'un papillon obturant une partie du collecteur d'admission. Il résulte de ce procédé des pertes par pompage élevées augmentant les consommations et des émissions de gaz nocifs importantes, surtout lorsque le moteur est peu sollicité.

Comparativement, les moteurs à injection directe présentent potentiellement de nombreux avantages par rapport aux moteurs à injection indirecte grâce à une stratification de la charge admise dans chaque cylindre. Ce procédé permet ainsi de supprimer le papillon du collecteur d'admission, le couple étant régulé par action sur la quantité d'essence introduite directement dans chaque cylindre, d'où une réduction importante des pertes par pompage. La combustion est parfaitement contrôlée, même pour les très faibles quantités d'essence injectées, du fait de la stratificatirn de la charge, ce qui conduit à fortement limiter les émissions de gaz polluants.

Des tentatives faites pour un moteur à injection directe dans une préchambre de combustion raccordée par une conduite à la chambre de combustion, n'ont pas donné de résultats satisfaisants, en ce qui concerne notamment l'émission des gaz nocifs.

La présente invention a pour objet la réalisation d'un moteur multicylindre à injection d'essence, comportant quatre soupapes par cylindre, de structure nouvelle, minimisant des émissions de gaz nocifs à l'échappement, avec un rendement élevé.

Plus particulièrement, l'invention a pour object un moteur à injection directe pour véhicule automobile.

L'invention a également pour object un moteur à injection indirecte pour automobile.

Le moteur multicylindre à injection d'essence, selon l'invention, comprend des moyens d'admission de l'air, des moyens d'échappement de gaz après combustion, des moyens d'injection de l'essence et des moyens d'allumage du mélange air/essence dans la chambre de combustion des cylindres.

Selon l'invention, le moteur comprend pour chacun de ses cylindres :
- une culasse formant couvercle dans la partie supérieure du cylindre et munie d'une chambre de combustion "en toit" constituée de deux parois planes inclinées se rejoignant au somment par une paroi sensiblement cylindrique selon un diamètre du cylindre;
- deux soupapes d'admission et deux soupapes d'échappement, débouchant perpendiculairement, et regroupées par deux, dans les parois inclinées de la chambre de combustion, les soupapes d'admission et les soupapes d'échappement étant disposées, respectivement, diamétralement opposées l'une à l'autre;
- deux bougies débouchant dans la paroi cylindrique au sommet de la chambre de combustion et dirigées de façon inclinée vers l'intérieur de la chambre de combustion.

Selon l'invention, le piston de chaque cylindre présente une protubérance diamétrale supérieure, comportant deux parois latérales inclinées parallèles respectivement aus parois inclinées de la chambre de combustion et coopérant chacune avec l'une des soupapes d'admission et l'une des soupapes d'échappement.

Selon un mode préféré de réalisation de l'invention, la protubérance diamétrale supérieure du piston présente une face supérieure cylindrique formant avec les deux parois latérales d'eux arêtes parallèles orientées vers le haut.

Selon un mode particulier de l'invention, la chambre de combustion comporte sur sa paroi cylindrique et au centre, un injecteur d'essence dirigé vers le bas selon l'axe du cylindre.

L'invention sera mieux comprise à l'étude de la description détaillée d'un mode de réalisation particulier de l'invention, pris à titre nullement limitafif et illustré par les dessins annexés, sur lesquels :

la figure 1 est une vue schématique de la culasse du côté inférieur selon l'invention;

la figure 2 est une vue schématique en coupe selon II-II de la figure 1, représentant la chambre de combustion lorsque le piston est à son point mort haut; et

la figure 3 est une vue en perspective du piston de la figure 2.

Sur les figures, est représenté un cylindre unique pour expliquer le fonctionnement du moteur de la présente invention, les autres cylindres du moteur fonctionnant de manière identique à celui illustré.

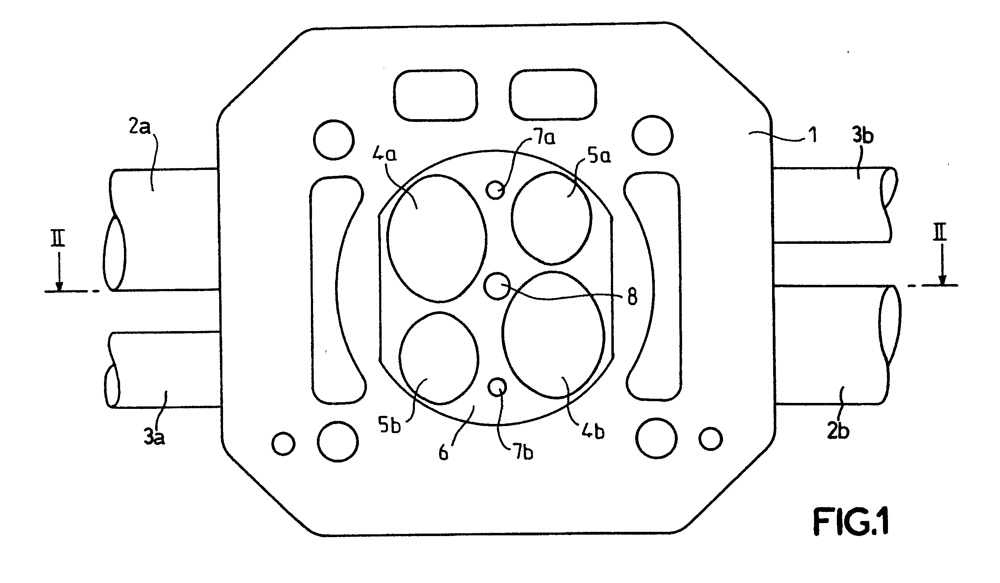

Tel qu'il est illustré sur la figure 1, le cylindre comprend une culasse 1 formant couvercle à sa partie supérieure. Deux conduites d'admission 2a et 2b et deux conduites d'échappement 3a et 3b sont connectées respectivement à deux soupapes d'admission 4a,4b et à deux soupapes d'échappement 5a et 5b. Les soupapes d'admission 4a,4b et d'échappement 5a,5b débouchent dans une cavité 6 de la culasse 1, formant une chambre de combustion du cylindre. Dans la chambre de combustion 6 débouchent, en outre, d'eux bougies d'allumage 7a,7b, diamétralement opposées et un injecteur 8 au centre.

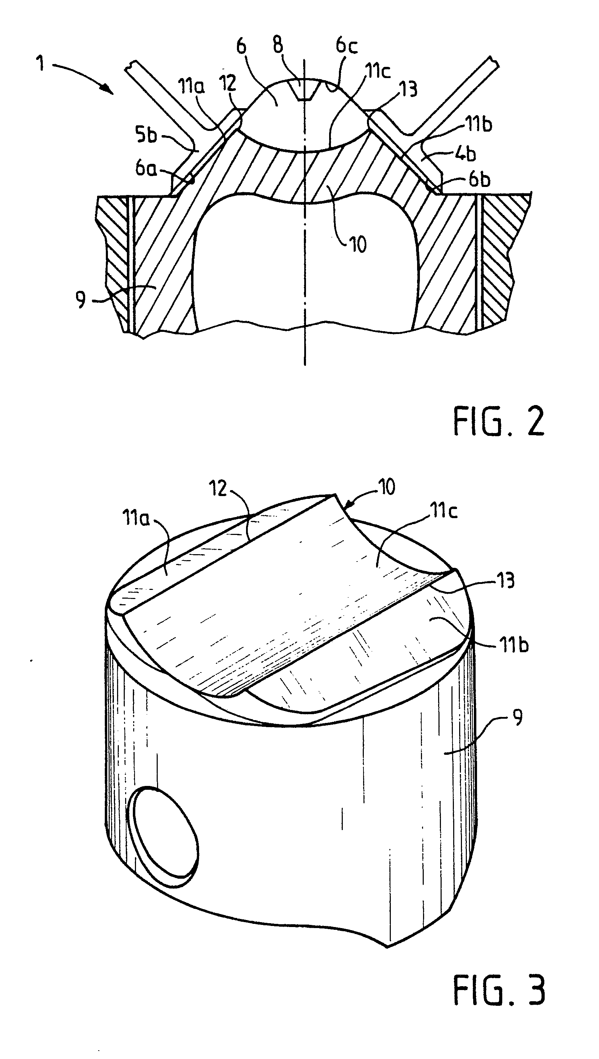

Comme représenté sur la figure 2, la cavité 6 dans la culasse 1 est sous forme d'un "toit" comportant deux parois inclinées 6a,6b raccordées au sommet par une paroi cylindrique 6c selon un diamètre du cylindre. Sur chacune des parois inclinées 6a et 6b, sont montées respectivement une soupape d'admission 4a,4b et une soupape d'échappement 5a,5b. Les soupapes d'admission 4a et 4b sont montées diamétralement opposées l'une à l'autre, ainsi que les soupapes d'échappement 5a et 5b.

Les bougies d'allumage 7a,7b ainsi que l'injecteur 8, sont montés sur la paroi cylindrique 6c au sommet de la chambre de combustion 6. L'injecteur 8 est dirigé vers le bas selon l'axe du cylindre. Les bougies d'allumage 7a et 7b sont de préférence légèrement inclinées par rapport à l'axe vertical du cylindre.

La figure 3 montre un piston 9 qui comporte une protubérance diamétrale supérieure 10. La protubérance 10 présente deux parois latérales 11a et 11b parallèles respectivement aux parois inclinées 6a et 6b de la chambre de combustion 6. La face supérieure 11c de la protubérance 10 est cylindrique et forme avec les parois latérales 11a et 11b deux arêtes 12 et 13 parallèles orientées vers le haut. Les dimensions de la protubérance 10 étant telles que, lorsque le piston arrive à son point mort haut, la protubérance 10 du piston 9 entre dans la cavité 6 de la culasse 1 avec de faibles entrefers entre les deux pièces.

Lors de la phase d'admission de l'air, les soupapes d'admission 4a et 4b s'ouvrent pendant que le piston 9 descend. La disposition des soupapes d'admission 4a et 4b génère un fort mouvement tourbillonnaire de l'air frais autour de l'axe vertical du cylindre. Si l'injection de carburant a lieu pendant la phase d'admission de l'air, le carburant se mélange de manière homogène avec l'air, du fait de la position centrale de l'injecteur. L'homogénéité du mélange est l'effet recherché pour obtenir des performances maximales du moteur.

Durant la phase de compression, le piston 9 effectue un mouvement ascendant. Le mouvement tourbillonnaire de l'air est perturbé par des zones de chasse de la culasse 1 et du piston 9 qui transforment la giration ordonnée en de multiples petits vortex locaux très favorables à la combustion, cela grâce en partie aux arêtes 12 et 13 de la protubérance 10 du piston qui brisent le mouvement tourbillonnaire. Si l'injection de carburant a lieu durant cette phase, les mouvements de chasse s'opposent au jet libre du carburant et confinent le carburant dans la chambre de combustion 6 au voisinage des brugies d'allumage 7a et 7b. Ce qui a pour effet une combustion localisée du mélange riche au voisinage des bougies, d'où formation de très faibles quantités d'oxydes d'azote.

L'air n'ayant pas participé à la combustion permet d'oxyder des gaz nocifs de combustion, notamment des hydrocarbures et le monooxyde de carbone. Il en résulte une réduction d'émission des gaz nocifs à l'échappement et donc une augmentation de la propreté du moteur. De tels fonctionnements sont très recherchés pour assurer le régime de faible charge du moteur, notamment pour des circulations urbaines.

En outre, l'invention permet de réduire la consommation en essence du moteur, grâce à l'optimisation de la quantité d'essence injectée pour la combustion. Le mouvement de microturbulence créé dans la chambre de combustion permet une meilleure combustion du mélange air/essence et donc de réduire en partie l'émission de gaz nocifs pendant la combustion.

Un autre cas de fonctionnement du moteur peut consister à n'utiliser que deux des quatre soupapes, une d'admission et une d'échappement, soit en débrayant par un moyen quelconque les soupapes inutilisées, soit en obturant le conduit correspondant par un papillon ou un volet. Les d'eux soupapes restant en service peuvent être, soit côte à côte, 5a et 4a ou 5b et 4b, soit opposées, 5a et 4b ou 5b et 4a. Ce cas de figure permet d'e réduire la quantité d'air admise dans chaque cylindre, de modifier les mouvements d'air créés lors de la phase d'admission et l'acoustique du collecteur d'admission en fonction du couple et du régime réclamés par le conducteur du véhicule automobile.

L'exemple illustré précédemment se rapporte à un moteur à injection directe. Il est possible de réaliser, selon l'invention, un moteur à injection indirecte en plaçant l'injecteur 8 dans la conduite d'admission de l'air 2 en amont des soupapes d'admission 4a,4b au lieu d'être à l'intérieur de la chambre de combustion 6. L'effet d'optimisation de la combustion créé grâce à la structure particulière du cylindre, permet d'apporter des améliorations importantes vis-à-vis des moteurs à injection indirecte classique.

Il est à noter également que le moteur à injection, selon l'invention, peut fonctionner comme un moteur à alcools avec un rendement élevé. Dans ce cas, il suffit de remplacer l'essence par un alcool et de l'injecter par l'intermédiaire des injecteurs.

## Revendications

1. Moteur multicylindre à injection de carburant, notamment d'essence, comprenant des moyens d'admission de l'air, des moyens d'échappement de gaz après combustion, des moyens d'injection de l'essence et des moyens d'allumage ; une culasse (1) munie d'une cavité (6) formant chambre de combustion "en toit" constituée de deux parois planes inclinées (6a, 6b) se rejoignant au sommet par une paroi sensiblement cylindrique (6c) selon un diamètre du cylindre ; deux soupapes d'admission (4a, 4b) et deux soupapes d'échappement (5a, 5b) débouchant dans les parois inclinées de la chambre de combustion, et disposées, respectivement, diamétralement opposées l'une à l'autre ; caractérisé en ce qu'il comprend pour chaque cylindre , deux bougies (7a, 7b) débouchant dans la paroi cylindrique au sommet de la chambre de combustion et orientées de façon inclinée par rapport à l'axe vertical du cylindre.

2. Moteur multicylindre à injection selon la revendication 1, caractérisé par le fait que le piston (9) du cylindre comporte une protubérance diamétrale supérieure (10) munie de deux parois latérales inclinées (11a, 11b) parallèles respectivement aux parois inclinées de la chambre de combustion.

3. Moteur multicylindre à injection selon la revendicatin 2, caractérisé par le fait que la face supérieure (11c) de la protubérance est sous forme cylindrique, raccordant respectivement les deux parois latérales (11a, 11b) pour former deux aretes parallèles (12, 13) dirigées vers le haut.

4. Moteur multicylindre à injection selon l'une quelconque des revendications précédentes, caractérisé par le fait qu'il comporte pour chaque cylindre un injecteur (8) dans la paroi cylindrique (6c) de la chambre de combustion (6).

5. Moteur multicylindre à injection selon la revendication 4, caractérisé par le fait que l'injecteur (8) est monté au centre de la chambre de combustion (6) set dirigé vers le bas selon l'axe du cylindre.

**FIG.1**

EP 0 412 008 A1

FIG. 2

FIG. 3

Office européen
des brevets

**RAPPORT DE RECHERCHE
EUROPEENNE**

Numéro de la demande

**EP 90 40 2202**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| Y | PATENT ABSTRACTS OF JAPAN vol. 9, no. 194 (M-403)(1917) 10 août 1985, & JP-A-60 060215 (DAIHATSU KOGYO KK) 06 avril 1985, * le document en entier * | 1,2,4,5 | F 02 B 23/10 F 02 B 23/08 |
| Y | DE-A-1 919 323  (BAYERISCHE MOTOREN WERKE AG) * page 4, ligne 25 - page 5, ligne 22; figure 1 * | 1,2,4,5 | |
| Y | US-A-4 445 467  (WESTERMAN ET AL.) * colonne 4, ligne 43 - colonne 4, ligne 57; figure 2 * | 1,2,4,5 | |
| A | DE-A-2 704 721  (NISSAN MOTOR CO. LTD.) * page 11, ligne 29 - page 12, ligne 21; figures 3-9 * | 1 | |
| A | US-A-4 162 661  (NAKANISHI ET AL.) | | |
| | | | **DOMAINES TECHNIQUES RECHERCHES (Int. Cl.5)** |
| | | | F 02 B F 02 F |

Le présent rapport de recherche a été établi pour toutes les revendications

| Lieu de la recherche | Date d'achèvement de la recherche | Examinateur |
|---|---|---|
| La Haye | 01 novembre 90 | ALCONCHEL Y UNGRIA J |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire
T : théorie ou principe à la base de l'invention

E : document de brevet antérieur, mais publié à la date de dépôt ou après cette date
D : cité dans la demande
L : cité pour d'autres raisons

& : membre de la même famille, document correspondant